# EUROPÄISCHE PATENTANMELDUNG

(11) **EP 2 280 088 A1**
(43) Veröffentlichungstag der Anmeldung: **02.02.2011**
(21) Anmeldenummer: 09166992.9
(22) Anmeldetag: 31.07.2009
(51) Int. Cl.: C21C 5/52, F27B 3/06, F27B 14/02, F27B 3/19, F27D 3/15

(54) **Vorrichtung zum Kippen eines metallurgischen Schmelzgefäßes, metallurgische Schmelzanordnung und Verfahren unter Verwendung einer solchen Schmelzanordnung**

(71) Anmelder: Siemens Aktiengesellschaft, 80333 München (DE)
(72) Erfinder: Huber, Hansjörg, 77694 Kehl (DE); Poulain, Mike, 77652 Offenburg (DE); Schmid, Michael, 77654 Offenburg (DE); Stahlberger, Matthias, 77855 Achern (DE)

(57) **Zusammenfassung**

Die Erfindung betrifft eine Vorrichtung (1) zum Kippen eines metallurgischen Schmelzgefäßes (50, 55) eines Elektrolichtbogenofens (101, 101'), welche eine kippbare Ofenbühne (2) umfasst, die eine Öffnung (3) zur Aufnahme des Schmelzgefäßes (50, 55) aufweist, welche zudem einen Antrieb zum Kippen der Ofenbühne (2) umfassend mindestens einen gelenkig mit der Ofenbühne (2) verbundenen Hubzylinder (4a) aufweist, und welche weiterhin mindestens eine Verriegelungseinrichtung (5a, 5b) zur Arretierung eines Kippwinkels der Ofenbühne (2) umfasst, wobei die Ofenbühne (2) derart ausgebildet ist, dass mindestens zwei unterschiedliche Arten von Schmelzgefäßen (50, 55) in die Öffnung (3) einsetzbar sind, die sich hinsichtlich einer Anordnung ihrer Abstichöffnungen (51, 56) und eines beim Abstich einzustellenden maximalen Kippwinkels unterscheiden, und wobei der jeweilige maximale Kippwinkel für jede der mindestens zwei Arten von Schmelzgefäßen (50, 55) mittels der mindestens einen Verriegelungseinrichtung (5a, 5b) arretierbar ist. Die Erfindung betrifft weiterhin eine metallurgische Schmelzanordnung (100, 100') mit einer derartigen Vorrichtung (1) und ein Verfahren unter Verwendung einer solchen Schmelzanordnung.

## Beschreibung

Die Erfindung betrifft eine Vorrichtung zum Kippen eines metallurgischen Schmelzgefäßes eines Elektrolichtbogenofens, wobei die Vorrichtung eine kippbare Ofenbühne umfasst, die eine Öffnung zur Aufnahme des Schmelzgefäßes aufweist, und welche zudem einen Antrieb zum Kippen der Ofenbühne in Form mindestens eines Hubzylinders aufweist. Die Erfindung betrifft weiterhin eine metallurgische Schmelzanordnung umfassend einen Elektrolichtbogenofen und eine derartige Vorrichtung. Schließlich betrifft die Erfindung ein Verfahren zur Herstellung von einerseits nichtrostendem Stahl und von andererseits Kohlenstoffstahl mittels einer derartigen metallurgischen Schmelzanordnung.

Bei der Herstellung von nichtrostendem Stahl und Kohlenstoffstahl werden in der Regel unterschiedlich aufgebaute metallurgische Schmelzanordnungen eingesetzt, die sich insbesondere hinsichtlich der verwendeten Abstich- bzw. Entleerungstechnik, der Geometrie der Schmelzgefäße und den Möglichkeiten zur Zugabe von Legierungsbestandteilen unterscheiden. So wird zur Herstellung von nichtrostenden Stählen üblicherweise ein Elektrolichtbogenofen eingesetzt, der ein Schmelzgefäß aufweist, das einen Schnauzenabstich ermöglicht und beim Abstich einen Kippwinkel von etwa 40° benötigt. Dagegen wird zur Herstellung von Kohlenstoffstahl üblicherweise ein Elektrolichtbogenofen eingesetzt, der ein Schmelzgefäß aufweist, das einen Bodenabstich ermöglicht und beim Abstich einen Kippwinkel von etwa 20° benötigt.

Das Entleeren eines Schmelzgefäßes eines Elektrolichtbogenofens erfolgt in der Regel durch Auskippen des Schmelzgefäßes mit Hilfe von Gelenken oder Wiegen, beispielsweise in Form von Rollwiegen, Wälzwiegen und dergleichen. Aufgrund der unterschiedlichen erforderlichen Kippwinkel bei der Herstellung von nichtrostendem Stahl und Kohlenstoffstahl sind auch diese Bauteile zum Kippen des Schmelzgefäßes üblicherweise unterschiedlich ausgeführt.

Die DE 295 80 394 U1 beschreibt einen Elektrolichtbogenofen der eingangs genannten Art zur Stahlherstellung, der ein in eine Öffnung einer Ofenbühne eingesetztes Schmelzgefäß aufweist. Das Schmelzgefäß weist eine Abstichöffnung zur Durchführung eines Bodenabstichs auf. Dabei sind das Schmelzgefäß und die Ofenbühne mittels eines Hubzylinders kippbar angeordnet. Aufgrund der Konfiguration des Schmelzgefäßes zur Durchführung eines Bodenabstichs eignet sich dieser Elektrolichtbogenofen insbesondere zur Herstellung von Kohlenstoffstahl.

Die DE 102 27 239 A1 offenbart einen Elektrolichtbogenofen zur Herstellung von nichtrostendem Stahl, der ein metallurgisches Schmelzgefäß aufweist, das zur Durchführung eines Schnauzenabstichs geeignet und auf Kippwiegen kippbar angeordnet ist. Als Antrieb zum Kippen des Schmelzgefäßes ist eine Kolben-Zylinder-Einheit vorhanden. Weiterhin ist eine Verriegelungseinrichtung in Form eines Nockens vorhanden, die den Kippwinkel des Schmelzgefäßes in beiden zur Verfügung stehenden Kipprichtungen begrenzt.

Um die Herstellung von nichtrostendem Stahl und Kohlenstoffstahl rationeller zu gestalten, werden bereits metallurgische Schmelzeinrichtungen eingesetzt, die die Herstellung beider Stahlsorten ermöglichen.

Die DE 195 45 831 A1 offenbart hierzu einen Doppelgefäß-Lichtbogenofen, der für die Erzeugung von Kohlenstoffstahl ein erstes Schmelzgefäß mit Bodenabstich und für die Erzeugung von nichtrostendem Stahl ein daneben angeordnetes zweites Schmelzgefäß mit einer Abstichrinne bzw. einer Abstichöffnung für einen Schnauzenabstich aufweist, wobei eine Elektrodenanordnung abwechselnd in die Schmelzgefäße eingeschwenkt werden kann.

Es ist Aufgabe der Erfindung, eine weitere Möglichkeit zur rationellen Herstellung von nichtrostendem Stahl und Kohlenstoffstahl anzugeben.

Die Aufgabe wird durch eine Vorrichtung zum Kippen eines metallurgischen Schmelzgefäßes eines Elektrolichtbogenofens, welche eine kippbare Ofenbühne umfasst, die eine Öffnung zur Aufnahme des Schmelzgefäßes aufweist, welche zudem einen Antrieb zum Kippen der Ofenbühne umfassend mindestens einen gelenkig mit der Ofenbühne verbundenen Hubzylinder aufweist, und welche weiterhin mindestens eine Verriegelungseinrichtung zur Arretierung eines Kippwinkels der Ofenbühne umfasst, gelöst, wobei die Ofenbühne derart ausgebildet ist, dass mindestens zwei unterschiedliche Arten von Schmelzgefäßen in die Öffnung einsetzbar sind, die sich hinsichtlich einer Anordnung ihrer Abstichöffnungen und eines beim Abstich einzustellenden maximalen Kippwinkels unterscheiden, und wobei der jeweilige maximale Kippwinkel für jede der mindestens zwei Arten von Schmelzgefäßen mittels der mindestens einen Verriegelungseinrichtung arretierbar ist.

Die Aufgabe wird weiterhin durch eine metallurgische Schmelzanordnung umfassend einen Elektrolichtbogenofen und eine erfindungsgemäße Vorrichtung gelöst, wobei der Elektrolichtofenbogen im Wechsel mit einem ersten Schmelzgefäß, das eine Abstichöffnung zur Durchführung eines Schnauzenabstichs aufweist, und einem dimensionsgleichen zweiten Schmelzgefäß betreibbar ist, das eine Abstichöffnung zur Durchführung eines Bodenabstichs aufweist

Die Aufgabe wird schließlich durch ein Verfahren zur Herstellung von einerseits nichtrostendem Stahl und von andererseits Kohlenstoffstahl mittels einer erfindungsgemäßen metallurgischen Schmelzeinrichtung gelöst, das folgende Schritte umfasst:
a) Einsetzen des ersten Schmelzgefäßes in die Öffnung der Vorrichtung;
b) Chargieren von erstem Chargiermaterial in das erste Schmelzgefäß und Erschmelzen des ersten Chargiermaterials unter Bildung einer ersten Schmelze aus nichtrostendem Stahl;
c) Abstechen der ersten Schmelze, wobei die Ofenbühne bis zu einem maximalen ersten Kippwinkel, der im Bereich von 20 bis 40° liegt, gekippt wird;
d) Auswechseln des ersten Schmelzgefäßes gegen das zweite Schmelzgefäß;
e) Chargieren von zweitem Chargiermaterial in das zweite Schmelzgefäß und Erschmelzen des zweiten Chargiermaterials unter Bildung einer zweiten Schmelze aus Kohlenstoffstahl; und
f) Abstechen der zweiten Schmelze, wobei die Ofenbühne bis zu einem zweiten maximalen Kippwinkel von höchstens 20° gekippt wird.

Die erfindungsgemäße Vorrichtung ermöglicht eine Herstellung unterschiedlicher Stahlsorten mit Hilfe eines Elektrolichtbogenofens, der mit unterschiedlichen Arten von Schmelzgefäßen betrieben wird. Die Ofenbühne ermöglicht dabei einen Wechsel der Schmelzgefäße des Elektrolichtbogenofens, wobei die übrigen Bauteile des Elektrolichtbogenofens, wie beispielsweise die Elektrodenanordnung usw., gleich bleiben. Dadurch werden die Investitionskosten gegenüber voneinander getrennten metallurgischen Schmelzanordnungen zur Herstellung unterschiedlicher Stahlsorten, insbesondere nichtrostendem Stahl und Kohlenstoffstahl, deutlich reduziert.

Die erfindungsgemäße metallurgische Schmelzanordnung, die unter Verwendung einer solchen Vorrichtung bereitgestellt wird, ist hinsichtlich der Stahlqualitäten, die damit produziert werden können, besonders flexibel einsetzbar und kostengünstig betreibbar. Der Platzbedarf einer derartigen Schmelzanordnung ist gegenüber dem Platzbedarf einer Anzahl an Schmelzanordnungen, die jeweils lediglich eine Stahlsorte produzieren können, enorm reduziert. Da mit Hilfe der Vorrichtung lediglich eine einzige anstelle von zwei separaten und unterschiedlich aufgebauten metallurgischen Schmelzanordnungen vorgehalten werden müssen, werden zudem die Kosten für erforderliche Wartungsmaßnahmen, Ersatzteile und eine Ersatzteilhaltung reduziert.

Mittels des erfindungsgemäßen Verfahrens, das die Herstellung von nichtrostendem Stahl und von Kohlenstoffstahl unter Verwendung einer solchen metallurgischen Schmelzanordnung beschreibt, kann ein Wechsel der Produktion von nichtrostendem Stahl auf Kohlenstoffstahl oder umgekehrt schnell, flexibel und kostengünstig durchgeführt werden.

Es hat sich für die Vorrichtung bewährt, wenn ein erstes Schmelzgefäß mit einer Abstichöffnung zur Durchführung eines Schnauzenabstichs und ein dimensionsgleiches zweites Schmelzgefäß mit einer Abstichöffnung zur Durchführung eines Bodenabstichs alternativ in die Öffnung der Ofenbühne einsetzbar sind. Dabei wird unter dem Begriff "dimensionsgleich" verstanden, dass die äußeren Abmessungen der Schmelzgefäße, wie deren Umfang, Höhe, Bodenwölbung usw. gleich ausgeführt sind. Lediglich die Anordnung der Abstichöffnung und deren konkrete Ausgestaltung sind unterschiedlich.

Die Ofenbühne der Vorrichtung ist bevorzugt auf zwei parallel angeordneten Wiegen bzw. Wiegewangen kippbar gelagert. Dabei kann es sich prinzipiell jede Art von Wiege, wie beispielsweise eine Rollwiege, Wälzwiege und dergleichen, handeln. Anstelle einer Wiege kann alternativ auch ein andersartiger Schwenk- oder Kippmechanismus eingesetzt werden.

Insbesondere weist die Ofenbühne eine mittels der Öffnung zweigeteilte Plattform mit einer Vorderseite und einer Rückseite auf, wobei beide Teile der Plattform durch mindestens einen Querträger mechanisch verbunden sind, der zur Abstützung eines Bodens des - jeweils einzusetzenden - Schmelzgefäßes ausgebildet ist. Der mindestens eine Querträger verleiht der Ofenbühne eine hohe Stabilität und Torsionssteifigkeit. Die Plattform ermöglicht insbesondere dem Bedienpersonal einen direkten Zugang zum Elektrolichtofenbogen.

Bevorzugt sind beide Teile der Plattform weiterhin durch einen parallel zur Rückseite der Plattform angeordneten Verbindungsträger miteinander verbunden. Der Verbindungsträger erhöht die Stabilität der Ofenbühne zusätzlich. Die sich über dem Verbindungsträger befindende Aussparung in der Plattform dient zur Aufnahme einer Schnauze eines Schmelzgefäßes für einen Schnauzenabstich. Dabei kann der Verbindungsträger die Schnauze auf ihrer Unterseite abstützen.

Es hat sich weiterhin als vorteilhaft erwiesen, wenn die beiden Teile der Plattform im Bereich der Vorderseite der Plattform mittels einer abnehmbaren Arbeitsbühne überbrückt sind. Die Arbeitsbühne ermöglicht es dem Bedienpersonal, von einem Teil der Plattform zum anderen Teil zu gelangen. Bei einem Wechsel der Schmelzgefäße kann die Arbeitsbühne entfernt werden, damit sie den Wechselvorgang nicht behindert. Dabei wird die Arbeitsbühne insbesondere verwendet, wenn Kohlenstoffstoffstahl produziert wird. Bei der Herstellung von nichtrostendem Stahl wird die Arbeitsbühne ganz oder zumindest dann entfernt, wenn ein Schnauzenabstich durchgeführt wird. Somit wird das Kippen des Schmelzgefäßes mit Schnauze durch die Arbeitsbühne nicht behindert.

Insbesondere ist die Arbeitsbühne auf die Plattform aufsteckbar ausgebildet. Dies ermöglicht ein schnelles und unkompliziertes Einsetzen bzw. Entfernen der Arbeitsbühne.

Es hat sich bewährt, wenn an der Arbeitsbühne eine Schurre angeordnet ist. Über diese können, manuell oder automatisch, Legierungsbestandteile in das Schmelzgefäß eingebracht werden. Bevorzugt umfasst die Schurre einen Trichter und einen Abwurfschacht, der in einer Zugabeöffnung des Schmelzgefäßes mündet.

Der Antrieb zum Kippen der Ofenbühne umfasst insbesondere mindestens einen gelenkig mit der Ofenbühne verbundenen Hubzylinder. Dadurch können verschiedene positive und negative Kippwinkel in Kipprichtung zur Vorder- oder Rückseite der Plattform eingestellt werden. Bei dem mindestens einen Hubzylinder handelt es sich insbesondere um einen Hydraulikzylinder. Ein solcher Hubzylinder ist an seinem der Ofenbühne abgewandten Ende mit einem Fundament insbesondere gelenkig verbindbar ausgebildet.

Die mindestens eine Verriegelungseinrichtung ist bevorzugt durch einen höhenverstellbaren Stempel gebildet, gegen welchen die Ofenbühne arretierbar ist. Dabei gibt die Position des Stempels den maximalen Kippwinkel des verwendeten Schmelzgefäßes vor. Dadurch wird ein unbeabsichtigtes Kippen eines Schmelzgefäßes über einen gewünschten oder auch zulässigen Kippwinkel hinaus zuverlässig verhindert.

Die metallurgische Schmelzanordnung weist bevorzugt mindestens eine Transporteinrichtung auf, mittels welcher das erste Schmelzgefäß und das zweite Schmelzgefäß gegeneinander austauschbar sind. Eine derartige Transporteinrichtung ist insbesondere dazu eingerichtet, ein Schmelzgefäß gegenüber der Ofenbühne anzuheben, abzusenken und in eine Position zu bringen, in der das Einsetzen eines alternativen Schmelzgefäßes in die Ofenbühne möglich ist. Dabei handelt es sich bevorzugt um einen Kran, insbesondere einen Deckenkran oder einen Portalkran.

Bei dem Verfahren erfolgt insbesondere vor Schritt d) und/oder nach Schritt f) eine Rückführung der Ofenbühne in die Horizontale. Dies vereinfacht den Wechsel der Schmelzgefäße und deren Positionierung auf der Ofenbühne, insbesondere mittels eines Krans.

In Schritt a) des Verfahrens erfolgt das Einsetzen des ersten Schmelzgefäßes in die Öffnung der Vorrichtung bevorzugt derart, dass die Abstichöffnung für einen Schnauzenabstich zur Rückseite der Plattform zeigt.

Die Arbeitsbühne wird bevorzugt erst nach Schritt d) auf der Plattform angeordnet. Bei der Durchführung eines Schnauzenabstichs ist die Arbeitsbühne eher hinderlich.

Nach Schritt f) wird bevorzugt die Arbeitsbühne wieder entfernt, das zweite Schmelzgefäß gegen das erste Schmelzgefäß ausgewechselt und die Schritte b) bis f) wiederholt. So kann ein ständiger oder zumindest zeitweiser Wechsel zwischen einer Produktion von nichtrostendem Stahl und Kohlenstoffstahl realisiert werden. Ein Auswechseln der Schmelzgefäße wird insbesondere mittels der mindestens einen Transporteinrichtung durchgeführt.

Die Figuren 1 bis 12 zeigen Beispiele für eine Vorrichtung, dafür geeignete Schmelzgefäße und eine damit ausgestattete metallurgische Schmelzanordnung. So zeigt:
- Figur 1: eine dreidimensionale Ansicht einer Vorrichtung;
- Figur 2: eine Seitenansicht der Vorrichtung gemäß Figur 1;
- Figur 3: eine Rückansicht der Vorrichtung gemäß Figur 1;
- Figur 4: eine Draufsicht auf die Vorrichtung gemäß Figur 1;
- Figur 5: eine Schnittdarstellung eines Schmelzgefäßes mit Bodenabstich;
- Figur 6: eine metallurgische Schmelzanordnung mit einem Schmelzgefäß gemäß Figur 5 im Schnittbild;
- Figur 7: eine dreidimensionale Ansicht einer weiteren Vor- richtung
- Figur 8: eine Seitenansicht der weiteren Vorrichtung gemäß Figur 7;
- Figur 9: eine Rückansicht der weiteren Vorrichtung gemäß Figur 7;
- Figur 10: eine Draufsicht auf die weitere Vorrichtung gemäß Figur 7;
- Figur 11: eine Schnittdarstellung eines weiteren Schmelzgefä- ßes mit Schnauzenabstich; und
- Figur 12: eine weitere metallurgische Schmelzanordnung mit einem Schmelzgefäß gemäß Figur 11 im Schnittbild.

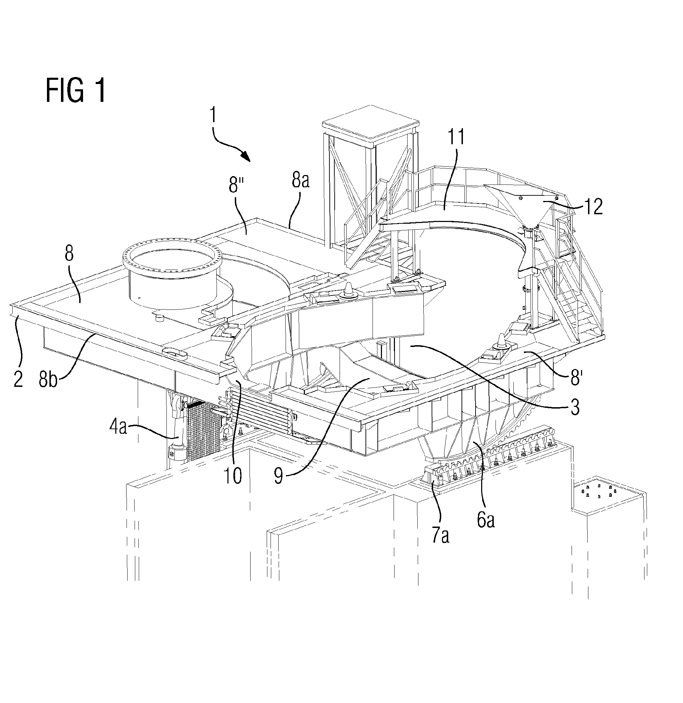

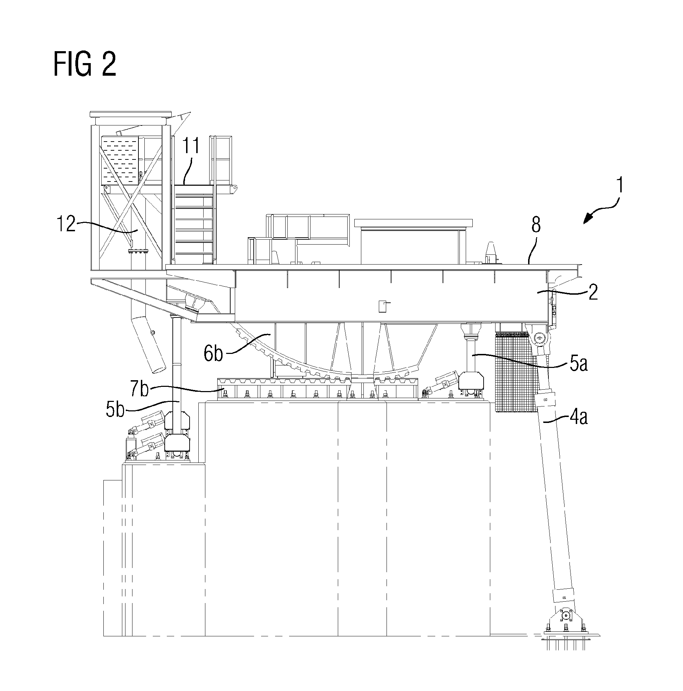

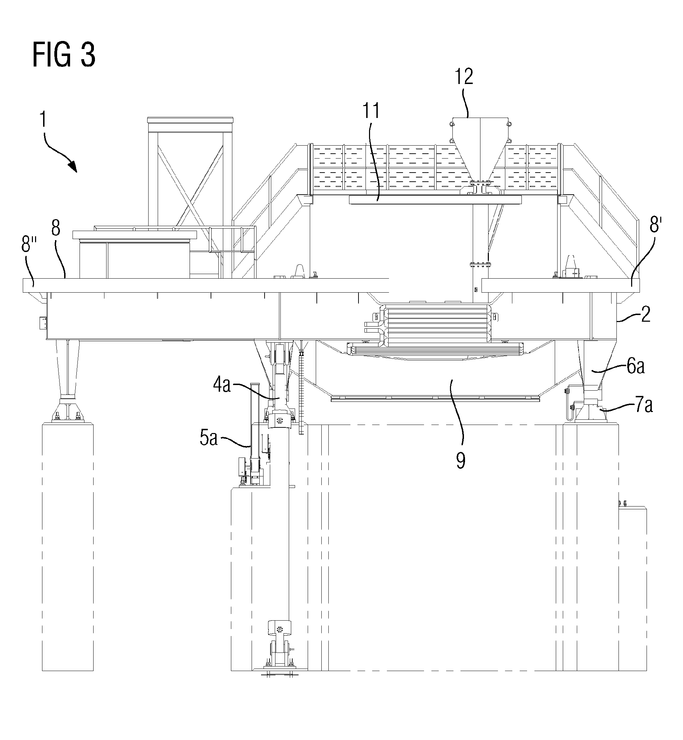

Figur 1 zeigt eine dreidimensionale Ansicht einer Vorrichtung 1 zum Kippen eines metallurgischen Schmelzgefäßes eines Elektrolichtbogenofens, welche eine kippbare Ofenbühne 2 umfasst, die eine Öffnung 3 zur Aufnahme des Schmelzgefäßes aufweist. Die Vorrichtung 1 weist zudem einen Antrieb zum Kippen der Ofenbühne 2 auf, der einen gelenkig mit der Ofenbühne 2 verbundenen Hubzylinder 4a umfasst. An seinem der Ofenbühne 2 abgewandten Ende wird der Hubzylinder 4a gelenkig mit einem Fundament verbunden. Die Ofenbühne 2 ist auf zwei Wiegewangen 6a, 6b angeordnet, die beim Kippen der Ofenbühne 2 auf einer Abrollfläche 7a, 7b abrollen. Die Abrollflächen 7a, 7b befinden sich dabei auf einem erhöhten weiteren Fundament, so dass es möglich ist, beim Abstich eine Gießpfanne unter einem in die Öffnung 3 eingesetzten Schmelzgefäß in Position zu bringen. Weiterhin weist die Vorrichtung 1 zwei Verriegelungseinrichtungen 5a, 5b zur Arretierung eines Kippwinkels der Ofenbühne 2 auf, die hier in Form höhenverstellbarer Stempel ausgebildet sind (siehe Figuren 2 und 3).

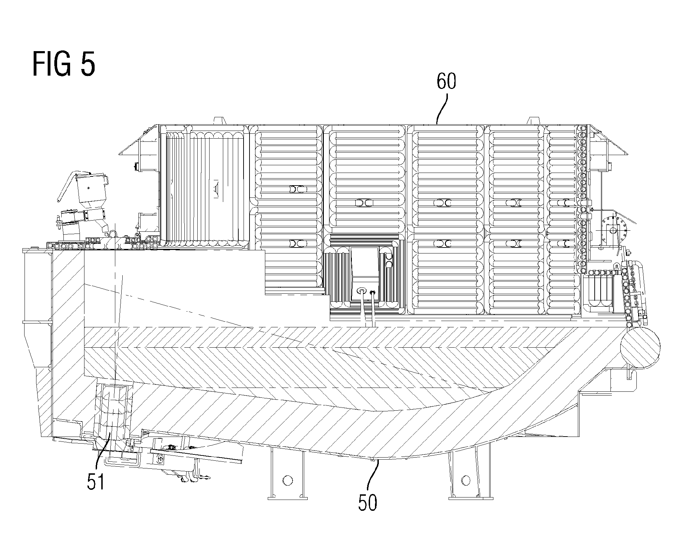

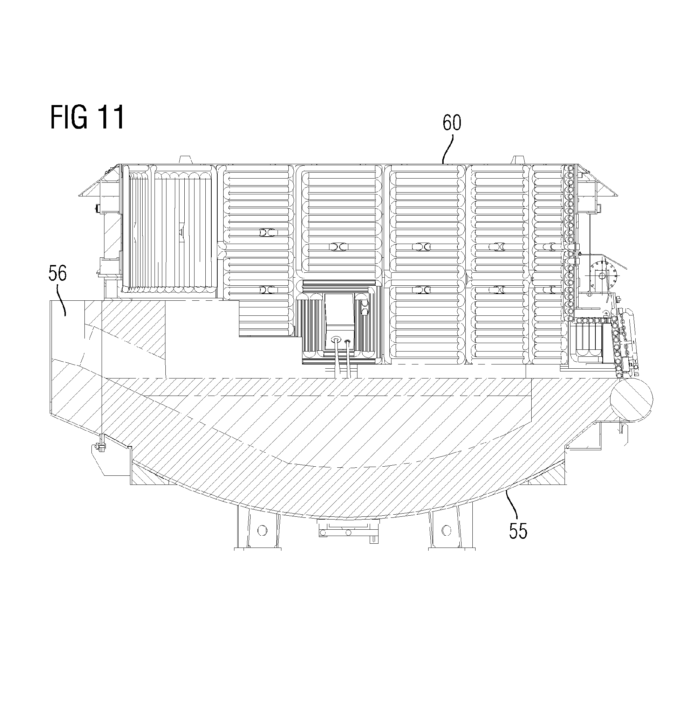

In die Öffnung 3 der Ofenbühne 2 sind hier zwei unterschiedliche Arten von Schmelzgefäßen einsetzbar, die sich hinsichtlich einer Anordnung ihrer Abstichöffnungen 51, 56 (siehe Figuren 5 und 11) und eines beim Abstich einzustellenden maximalen Kippwinkels unterscheiden. Der jeweils maximale Kippwinkel für jedes der beiden Schmelzgefäße ist mittels der Verriegelungseinrichtungen 5a, 5b arretierbar. Die Ofenbühne 2 umfasst eine mittels der Öffnung 3 zweigeteilte Plattform 8 mit einer Vorderseite 8a und einer Rückseite 8b, wobei beide Teile 8', 8" der Plattform 8 durch einen Querträger 9 mechanisch fest verbunden sind. Der Querträger 9 dient zur Stabilisierung der Ofenbühne 2 und Abstützung eines Bodens des Schmelzgefäßes. Die beiden Teile 8', 8" der Plattform 8 sind weiterhin durch einen parallel zur Rückseite 8b angeordneten Verbindungsträger 10 miteinander verbunden. Die beiden Teile 8', 8'' der Plattform 8 sind im Bereich der Vorderseite 8a mittels einer abnehmbaren Arbeitsbühne 11 überbrückt, an der eine Schurre 12 befestigt ist, die einen Trichter und einen Abwurfschacht umfasst.

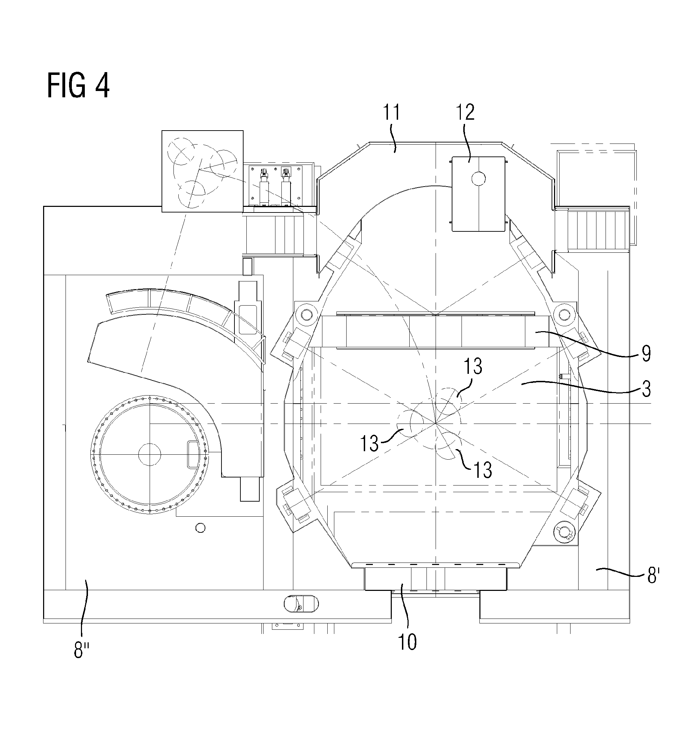

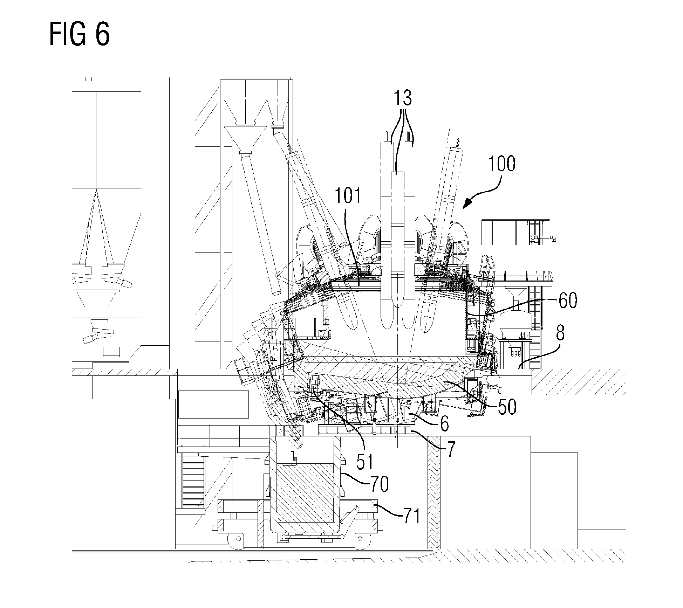

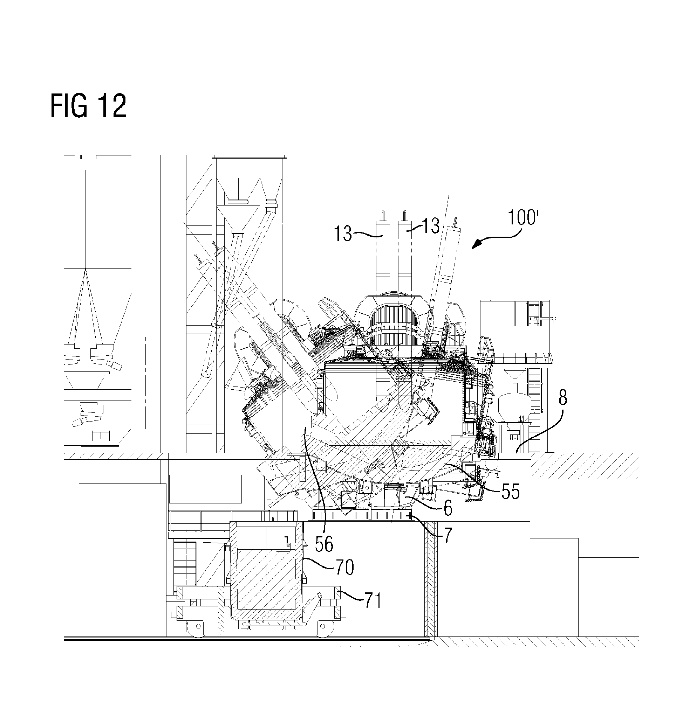

Figur 2 zeigt eine Seitenansicht, Figur 3 eine Rückansicht und Figur 4 eine Draufsicht auf die Vorrichtung 1 gemäß Figur 1. In der Draufsicht ist in der Öffnung 3 die Position der drei im Betrieb eines Elektrolichtbogenofens 101, 101' (siehe Figuren 6 und 12) vorgesehenen Elektroden 13 vermerkt.

Die in den Figuren 1 bis 4 dargestellte Konfiguration der Vorrichtung 1 ist insbesondere zur Herstellung von Kohlenstoffstahl geeignet. Dazu wird in die Vorrichtung 1 ein Schmelzgefäß 50 mit einer Abstichöffnung 51 zur Durchführung eines Bodenabstichs eingesetzt, wie es in Figur 5 in Schnitt dargestellt ist. Das Schmelzgefäß 50 wird mit einer schwenkbaren Haube 60 verschlossen, durch die die Elektroden 13 führbar sind. Dabei ist die Haube 60 bevorzugt für beide Arten von zusammen mit der Vorrichtung 1 verwendbaren Schmelzgefäßen 50, 55 (siehe Figuren 5 und 11) identisch.

Figur 6 zeigt einen Bodenabstich einer metallurgischen Schmelzanordnung 100 im Schnitt, umfassend einen Elektrolichtbogenofen 101 und eine Vorrichtung 1 gemäß den Figuren 1 bis 4, von der hier allerdings zur besseren Übersicht nur die Plattform 8, die Wiege 6 und eine der Abrollflächen 7 bezeichnet sind. Das Schmelzgefäß 50 ist dabei mit seiner Abstichöffnung 51 in Richtung der Arbeitsbühne 11 in die Plattform 8 eingesetzt. Der Kippvorgang zum Entleeren des Schmelzgefäßes 50 ist gestrichelt angedeutet. Dabei wird der Inhalt des Schmelzgefäßes 50 über die Abstichöffnung 51 in eine Gießpfanne 70 entleert, die mittels eines Wagens 71 unterhalb der Ofenbühne 2 in Position gebracht wurde.

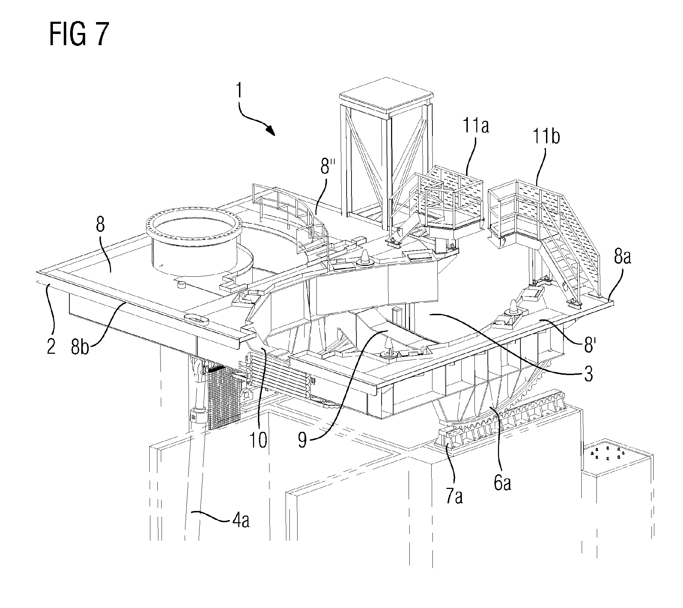

Figur 7 zeigt eine dreidimensionale Ansicht der Vorrichtung 1 zum Kippen eines metallurgischen Schmelzgefäßes eines Elektrolichtbogenofens, wie sie in den Figuren 1 bis 4 bereits dargestellt ist. Gleiche Bezugszeichen kennzeichnen gleiche Bauteile. Im Unterschied zu den Figuren 1 bis 4 wurde hier die einteilige Arbeitsbühne 11 abgenommen und durch eine zweiteilige Arbeitsbühne 11a, 11b ersetzt.

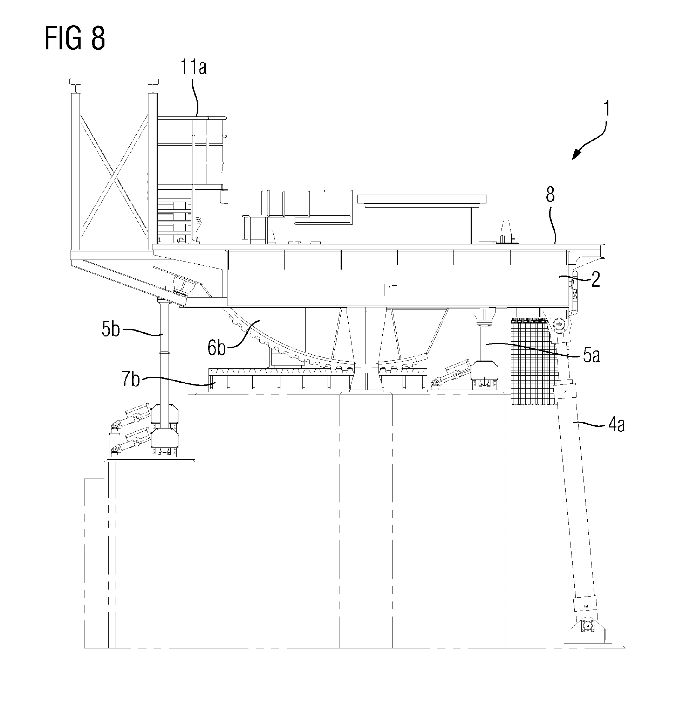

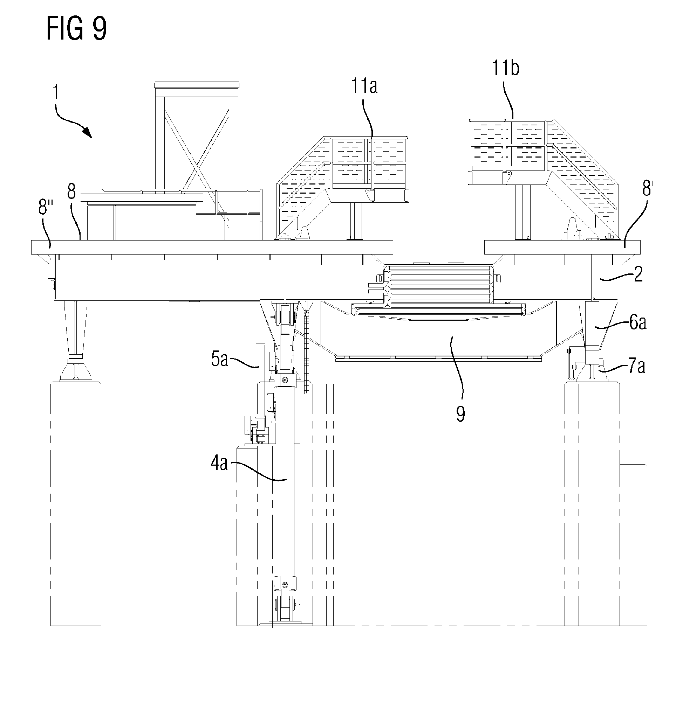

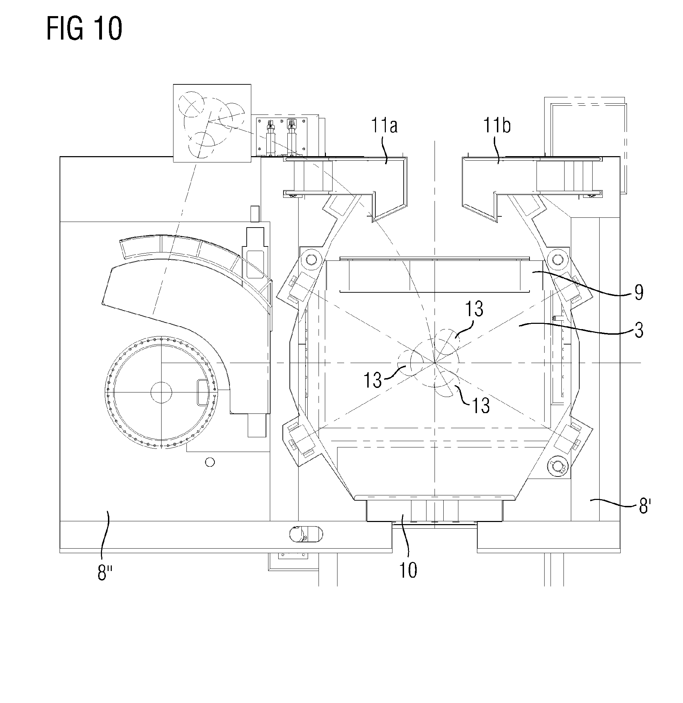

Figur 8 zeigt eine Seitenansicht, Figur 9 eine Rückansicht und Figur 10 eine Draufsicht auf die Vorrichtung 1 gemäß Figur 7. In der Draufsicht ist in der Öffnung 3 die Position der drei vorgesehenen Elektroden 13 des Elektrolichtbogenofens 101, 101' vermerkt.

Die in den Figuren 7 bis 10 dargestellte Konfiguration der Vorrichtung 1 ist insbesondere zur Herstellung von nichtrostendem Stahl geeignet. Dazu wird in die Vorrichtung 1 ein Schmelzgefäß 55 mit einer Abstichöffnung 56 zur Durchführung eines Schnauzenabstichs eingesetzt, wie es in Figur 11 in Schnitt dargestellt ist. Das Schmelzgefäß 55 wird mit der schwenkbaren Haube 60 verschlossen, durch die die Elektroden 13 führbar sind. Dabei ist die Haube 60 insbesondere für beide Arten von verwendeten Schmelzgefäßen 50, 55 identisch.

Figur 12 zeigt einen Schnauzenabstich einer metallurgischen Schmelzanordnung 100' im Schnitt, umfassend einen Elektrolichtbogenofen 101' und eine Vorrichtung 1 gemäß den Figuren 7 bis 11, von der hier allerdings zur besseren Übersicht nur die Plattform 8, die Wiege 6 und eine der Abrollflächen 7 bezeichnet sind. Das Schmelzgefäß 55 ist dabei mit seiner Abstichöffnung 56 in Richtung des Verbindungsträgers 10 in die Plattform 8 eingesetzt. Der Kippvorgang zum Entleeren des Schmelzgefäßes 55 ist gestrichelt angedeutet. Dabei wird der Inhalt des Schmelzgefäßes 55 über die Abstichöffnung 56 in eine Gießpfanne 70 entleert, die mittels eines Wagens 71 unterhalb der Ofenbühne 2 in Position gebracht wurde.

Ein Fachmann ist ohne weiteres in der Lage, die Vorrichtung an geänderte Schmelzgefäße, Haubenkonfigurationen usw. anzupassen. Auch die im Ausführungsbeispiel dargestellten Wiegen bzw. Wiegewangen sowie der Antrieb können in einfacher Weise gegen andersartige Einrichtungen zum Kippen der Vorrichtung ausgetauscht werden.

## Patentansprüche

1. Vorrichtung zum Kippen eines metallurgischen Schmelzgefäßes (50, 55) eines Elektrolichtbogenofens (101, 101'), welche eine kippbare Ofenbühne (2) umfasst, die eine Öffnung (3) zur Aufnahme des Schmelzgefäßes (50, 55) aufweist, welche zudem einen Antrieb zum Kippen der Ofenbühne (2) umfassend mindestens einen gelenkig mit der Ofenbühne (2) verbundenen Hubzylinder (4a) aufweist, und welche weiterhin mindestens eine Verriegelungseinrichtung (5a, 5b) zur Arretierung eines Kippwinkels der Ofenbühne (2) umfasst, wobei die Ofenbühne (2) derart ausgebildet ist, dass mindestens zwei unterschiedliche Arten von Schmelzgefäßen (50, 55) in die Öffnung (3) einsetzbar sind, die sich hinsichtlich einer Anordnung ihrer Abstichöffnungen (51, 56) und eines beim Abstich einzustellenden maximalen Kippwinkels unterscheiden, und wobei der jeweilige maximale Kippwinkel für jede der mindestens zwei Arten von Schmelzgefäßen (50, 55) mittels der mindestens einen Verriegelungseinrichtung (5a, 5b) arretierbar ist.

2. Vorrichtung nach Anspruch 1,
wobei ein erstes Schmelzgefäß (55) mit einer Abstichöffnung (56) zur Durchführung eines Schnauzenabstichs und ein dimensionsgleiches zweites Schmelzgefäß (50) mit einer Abstichöffnung (51) zur Durchführung eines Bodenabstichs alternativ in die Öffnung (3) der Ofenbühne (2) einsetzbar sind.

3. Vorrichtung nach einem der Ansprüche 1 oder 2,
wobei die Ofenbühne (2) auf zwei Wiegewangen (6a, 6b) kippbar gelagert ist.

4. Vorrichtung nach einem der Ansprüche 1 bis 3,
wobei die Ofenbühne (2) eine mittels der Öffnung (3) zweigeteilte Plattform (8) mit einer Vorderseite (8a) und einer Rückseite (8b) aufweist, wobei beide Teile (8', 8'') der Plattform (8) durch mindestens einen Querträger (9) mechanisch verbunden sind, der zur Abstützung eines Bodens des Schmelzgefäßes (50, 55) ausgebildet ist.

5. Vorrichtung nach Anspruch 4,
wobei beide Teile (8', 8'') der Plattform (8) weiterhin durch einen parallel zur Rückseite (8b) angeordneten Verbindungsträger (10) miteinander verbunden sind.

6. Vorrichtung nach einem der Ansprüche 4 oder 5,
wobei die beiden Teile (8', 8") der Plattform (8) im Bereich der Vorderseite (8a) mittels einer abnehmbaren Arbeitsbühne (11, 11a, 11b) überbrückt sind.

7. Vorrichtung nach Anspruch 6,
wobei die Arbeitsbühne (11, 11a, 11b) auf die Plattform (8) aufsteckbar ist.

8. Vorrichtung nach einem der Ansprüche 6 oder 7,
wobei an der Arbeitsbühne (11, 11a, 11b) eine Schurre (12) angeordnet ist.

9. Vorrichtung nach Anspruch 8, wobei die Schurre (12) einen Trichter und einen Abwurfschacht umfasst.

10. Vorrichtung nach einem der Ansprüche 1 bis 9,
wobei der Antrieb einen Hubzylinder (4a) umfasst.

11. Vorrichtung nach einem der Ansprüche 1 bis 10,
wobei die mindestens eine Verriegelungseinrichtung (5a, 5b) durch einen höhenverstellbaren Stempel gebildet ist, gegen welchen die Ofenbühne (2) arretierbar ist.

12. Vorrichtung nach einem der Ansprüche 1 bis 11,
wobei der mindestens eine Hubzylinder (4a) an seinem, der Ofenbühne (2) abgewandten Ende mit einem Fundament gelenkig verbindbar ausgebildet ist.

13. Metallurgische Schmelzanordnung (100, 100') umfassend einen Elektrolichtbogenofen (101, 101') und eine Vorrichtung (1) nach einem der Ansprüche 1 bis 12, wobei der Elektrolichtofenbogen (101, 101') im Wechsel mit einem ersten Schmelzgefäß (55), das eine Abstichöffnung (56) zur Durchführung eines Schnauzenabstichs aufweist, und einem dimensionsgleichen zweiten Schmelzgefäß (50) betreibbar ist, das eine Abstichöffnung (51) zur Durchführung eines Bodenabstichs aufweist.

14. Metallurgische Schmelzanordnung nach Anspruch 13,
wobei weiterhin mindestens eine Transporteinrichtung vorhanden ist und dass das erste Schmelzgefäß (55) und das zweite Schmelzgefäß (50) mittels der mindestens einen Transporteinrichtung gegeneinander austauschbar sind.

15. Verfahren zur Herstellung von einerseits nichtrostendem Stahl und von andererseits Kohlenstoffstahl mittels einer metallurgischen Schmelzeinrichtung (100, 100') nach einem der Ansprüche 13 oder 14, mit folgenden Schritten:
a) Einsetzen des ersten Schmelzgefäßes (55) in die Öffnung (3) der Vorrichtung (1);
b) Chargieren von erstem Chargiermaterial in das erste Schmelzgefäß (55) und Erschmelzen des ersten Chargiermaterials unter Bildung einer ersten Schmelze aus nichtrostendem Stahl;
c) Abstechen der ersten Schmelze, wobei die Ofenbühne (2) bis zu einem maximalen ersten Kippwinkel, der im Bereich von 20 bis 40° liegt, gekippt wird;
d) Auswechseln des ersten Schmelzgefäßes (55) gegen das zweite Schmelzgefäß (50);
e) Chargieren von zweitem Chargiermaterial in das zweite Schmelzgefäß (50) und Erschmelzen des zweiten Chargiermaterials unter Bildung einer zweiten Schmelze aus Kohlenstoffstahl; und
f) Abstechen der zweiten Schmelze, wobei die Ofenbühne (2) bis zu einem zweiten maximalen Kippwinkel von höchstens 20° gekippt wird.

16. Verfahren nach Anspruch 15,
wobei vor Schritt d) und/oder nach Schritt f) eine Rückführung der Ofenbühne (2) in die Horizontale erfolgt.

17. Verfahren nach Anspruch 15 oder Anspruch 16,
wobei in Schritt a) das Einsetzen des ersten Schmelzgefäßes (55) in die Öffnung (3) der Vorrichtung (1) derart erfolgt, dass der Schnauzenabstich zur Rückseite (8b) der Plattform (8) zeigt.

18. Verfahren nach einem der Ansprüche 15 bis 17,
wobei nach Schritt d) die Arbeitsbühne (11) auf der Plattform (8) angeordnet wird.

19. Verfahren nach einem der Ansprüche 15 bis 18,
wobei nach Schritt f) die Arbeitsbühne (11) wieder entfernt, das zweite Schmelzgefäß (50) gegen das erste Schmelzgefäß (55) ausgewechselt und die Schritte b) bis f) wiederholt werden.

20. Verfahren nach Anspruch 19,
wobei das Auswechseln der Schmelzgefäße (50, 55) mittels der mindestens einen Transporteinrichtung durchgeführt wird.
